# EUROPÄISCHE PATENTSCHRIFT

(11) **EP 3 856 557 B1**
(45) Veröffentlichungstag und Bekanntmachung des Hinweises auf die Patenterteilung: **05.07.2023**
(21) Anmeldenummer: 19773736.4
(22) Anmeldetag: 03.09.2019
(51) Int. Cl.: B60K 35/00, B60J 3/04, G02F 1/163, G06V 20/59

(54) **VERFAHREN ZUM DETEKTIEREN VON LICHTVERHÄLTNISSEN IN EINEM FAHRZEUG**
METHOD FOR DETECTING LIGHT CONDITIONS IN A VEHICLE
PROCÉDÉ POUR LA DÉTECTION DE CONDITIONS D'ÉCLAIRAGE DANS UN VÉHICULE

(30) Priorität: 27.09.2018 DE 102018216562
(43) Veröffentlichungstag der Anmeldung: 04.08.2021
(73) Patentinhaber: Continental Autonomous Mobility Germany GmbH, 85057 Ingolstadt (DE)
(72) Erfinder: GLOGER, Charlotte, 90411 Nürnberg (DE); BÜRKER, Martin, 90411 Nürnberg (DE); PANAKOS, Andreas, 90411 Nürnberg (DE); FRIEBE, Markus, 90411 Nürnberg (DE)
(74) Vertreter: Continental Corporation
(86) Internationale Anmeldenummer: PCT/DE2019/200107
(87) Internationale Veröffentlichungsnummer: WO 2020/064065

(56) Entgegenhaltungen:
- DE-A1- 10 338 764
- DE-A1- 19 933 397
- DE-A1-102006 036 976
- DE-A1-102016 222 911
- JP-A- 2008 044 603

## Beschreibung

Die Erfindung betrifft ein System und ein Verfahren zum Detektieren von Lichtverhältnissen in einem Fahrzeug, wobei eine negative Beeinflussung auf den Fahrer des Fahrzeugs ermittelt wird und in Abhängigkeit der ermittelten negative Beeinflussung Maßnahmen gegen die negative Beeinflussung veranlasst werden. Eine Störlichtwirkung kann beispielsweise eine Blendwirkung auf den Fahrer sein.

Ein Problem während des Fahrens im Straßenverkehr sind oftmals schwierige Sichtverhältnisse, die durch Blendung durch die Sonne, durch schnelle Helligkeitswechsel, wie zum Beispiel bei einer Fahrt an einer Baumgruppe entlang, durch eine flach stehende Sonne durchscheint, oder auch durch die Blendwirkung von Scheinwerfern anderer Fahrzeuge in der Nacht hervorgerufen werden können.

Die JP 2008 044603 A beschreibt ein System für ein Fahrzeug, das eine Kamera und Sensoren aufweist, um die Position der Augen eines Insassen zu detektieren und eine Kamera, um die Position der Sonne zu detektieren. Das einfallende Sonnenlicht wird durch eine Sonnenblende gedimmt.

Die DE 103 38 764 A1 beschreibt ein System, bei dem der Sonnenstand und die Fahrzeugposition bestimmt wird. Die Richtung der Sonneneinstrahlung wird bestimmt, wenn sich die Sonne oberhalb des Horizonts befindet.

Die DE 10 2016 222911 A1 beschreibt eine am Kopf tragbare Anzeigevorrichtung, sowie einen am transparenten Display angebrachten Sensor, dessen Lichtdurchlässigkeit veränderbar ist.

Die DE 10 2006 036976 A1 betrifft eine Vorrichtung zur Licht-Abschattung von Raumbereichen in einem Fahrzeug.

Die DE 19933397 A beschreibt eine Augenschutzvorrichtung gegen von einer Strahlungsquelle einfallende Strahlung. Die Augenschutzvorrichtung ist mit einer Ortungseinrichtung für die Strahlungsquelle, einer Erfassungseinrichtung für die Augenposition, einem transparenten, flächigen Blendenträger zur Erzeugung eines Blendenfleckes und einer zentralen Rechen- und Steuereinrichtung versehen. Letztere erzeugt durch entsprechende Ansteuerung des Blendenträgers einen Blendenfleck auf dem Blendenträger, der die Blendwirkung der Strahlungsquelle gezielt herabsetzt.

Es ist eine Aufgabe der Erfindung, die Sicherheit im Straßenverkehr zu verbessern.

Die Aufgabe wird durch ein Fahrerassistenzsystem und ein Verfahren gemäß den Merkmalen der unabhängigen Ansprüche gelöst. Weiterhin wird ein Fahrzeug vorgeschlagen, das ein solches System aufweist. Die jeweils rückbezogenen abhängigen Ansprüche geben vorteilhafte Weiterbildungen der Erfindung wieder.

Gemäß einem Aspekt weist ein Fahrerassistenzsystem für ein Fahrzeug eine Sensoranordnung auf, die zum Erfassen von Sensordaten eingerichtet ist. Das Fahrerassistenzsystem weist weiterhin eine Steuereinrichtung auf, eingerichtet zum Feststellen, ob die Sicht eines Fahrers des Fahrzeugs durch eine fahrzeugexterne Störlichtquelle negativ beeinflusst wird.

Die negative Beeinflussung von Licht auf den Fahrer kann grundsätzlich in zwei Kategorien eingeteilt werden. Zum einen kann es eine direkte oder indirekte Blendung des Fahrers sein; das heißt, das Licht fällt im Wesentlichen direkt ins Auge des Fahrers. Hierbei kann das Licht unmittelbar ins Auge des Fahrers treffen. Das Licht kann hierbei aber auch durch Umlenkung und/oder Reflexionen ins Auge des Fahrers treffen. Dies bedeutet insbesondere, dass zwischen dem Licht und dem Fahrer noch eine Reflexions- und/oder Umlenkquelle vorhanden ist, die das Licht erfasst und dann ins Auge des Fahrers weiterleitet. Als Reflexions- und/oder Umlenkquelle sind beispielsweise Spiegel oder metallische Flächen, wie zum Beispiel eine Fahrzeugkarossiere, insbesondere eine Motorhaube, denkbar. Dadurch wird seine Sicht beeinträchtigt, was zu Gefahrensituationen führen kann. Zum anderen kann der störende Lichteinfall zur einer Beeinträchtigung der Lesbarkeit von Anzeigen, wie z.B. der Instrumententafel mit der Geschwindigkeitsanzeige oder die Anzeige eines Navigationsgerätes, führen.

Gemäß einer Ausführungsform ist die Steuereinrichtung eingerichtet, um Maßnahmen zu ergreifen, um die negative Beeinflussung des Fahrers durch die Störlichtquelle zu verringern, falls eine negative Beeinflussung festgestellt wurde.

Das heißt, die Steuereinrichtung trifft Maßnahmen zum Beispiel gegen die Blendung und Maßnahmen zur Verbesserung der Lesbarkeit der Anzeigen. Maßnahmen können beispielsweise in beiden Fällen eine Verdunkelung der Scheiben sein, eine Erhöhung der Lichtintensität der Anzeige oder eine Unterbrechung des Lichtweges des von außerhalb des Fahrzeugs einfallenden, störenden Lichts.

Gemäß einer Ausführungsform ist die Steuereinrichtung eingerichtet, störungssensitive Koordinaten bezüglich der negativen Beeinflussung in dem Fahrzeug zu bestimmen;
die Sensoren eingerichtet sind, Bilder der Fahrzeugumgebung zu erfassen; und
die Steuereinrichtung eingerichtet ist, die Störlichtquellen in den Bildern zu detektieren, die Koordinaten der Störlichtquellen zu berechnen, die störungssensitiven Koordinaten zu bestimmen, und anhand der Koordinaten der Störlichtquellen und der störungssensitiven Koordinaten zu ermitteln, ob eine negative Beeinflussung auf den Fahrer vorliegt.

Unter störungssensitiven Koordinaten bezüglich der negativen Beeinflussung sind hierbei die Koordinaten zu verstehen, auf die das Licht fällt, aufgrund dessen der Fahrer negativ beeinflusst wird. Beispielsweise sind diese Koordinaten Positions- und Richtungskoordinaten der Augen und der Anzeige. Es werden darunter aber auch die Positionen und Richtungen von Reflektoren, wie z.B. Spiegeln verstanden.

Um die negative Beeinflussung ermitteln zu können, werden zunächst Bilder der Fahrzeugumgebung mit Kameras erfasst und die Kamerabilder analysiert. Die Kameras erfassen hierbei insbesondere Bilder von allen Seiten des Fahrzeugs aus, d.h. von der linken und der rechten Seite, der Rückseite und der Vorderseite des Fahrzeugs. Die Bilder können auch einer Videosequenz entnommen werden.

Die Detektion der Störlichtquellen kann beispielsweise durch Erfassung von Linsenblendeffekten wie Reflektionen oder von Störlichtquellen erfolgen, die sich in hellen Bereichen des Bildes widerspiegeln. Linsenreflektionen werden durch extreme Lichtsituationen in bestimmten Bereichen des Kamerachips verursacht und weisen auf Lichtquellen wie Sonnenlicht oder starke Reflektionen in der Umgebung hin. Aus dem zweidimensionalen Bild und den Kamera-Kalibrationsmatrizen werden die Koordinaten der Lichtquelle, die ein Störlicht darstellen kann, derart bestimmt, dass zumindest die Einfallsrichtung des Lichts oder auch die Position der Lichtquelle dreidimensional bekannt ist.

Das Berechnen der Koordinaten der Störlichtquelle kann auf verschiedene Arten erfolgen. Gemäß einem Ausführungsbeispiel kann die Störlichtquelle einen deterministischen Hintergrund aufweisen, wie z.B. der Verlauf der Sonne in Abhängigkeit von Tag und Uhrzeit. Dies erlaubt zum Beispiel ein Prädizieren des Lichteinfalls. Hier kann, nachdem auf dem Bild ein Störlicht festgestellt wurde, das mit den Koordinaten bzw. dem Einfallswinkel der Sonne zusammenpasst und - evtl. nach weiterer Plausibilisierung - der Sonne zugeordnet werden kann, zusätzlich der Straßenverlauf aus einem Navigationsgerät, Wetterdaten, oder Daten eines anderen Fahrzeugs zur Berechnung oder Plausibilisierung mitberücksichtigt werden. Es kann zudem geprüft werden, ob die Sonne eine Störquelle ist, auch wenn sie nicht auf den Bildern erscheint, z.B. weil sie zu hoch steht, um von den Kameras erfasst zu werden, oder so steht, dass sie bzw. ihre Strahlung von einer Reflexions- und/oder Umlenkquelle in die Bilder umgelenkt bzw. reflektiert wird.

Um nun zu bestimmen, ob der Fahrer durch den Lichteinfall beeinträchtigt wird, muss die Geometrie des Fahrzeugs und die Position der Augen, bzw. die Augenhöhe berücksichtigt werden.

Da die Kameras sich nicht an der Position des Fahrers befinden, kann es vorkommen, dass ein auf dem Bild abgebildeter Lichteinfall den Fahrer z.B. aufgrund der Abschattung durch das Dach des Fahrzeugs nicht blendet. Um die Berechnung bezüglich der Position des Fahrers, bzw. dessen Augen durchzuführen, wird zunächst dessen Augenhöhe bestimmt.

Zur Bestimmung der Augenhöhe könnte der Fahrer z.B. seine Größe angeben, oder es wird eine Standardgröße verwendet. Die Standardgröße kann zum Beispiel eine Standardgröße für Männer oder eine für Frauen sein. Die Größe oder die Koordinaten der Augen können weiterhin durch z.B. eine Kamera oder durch andere Sensoren detektiert werden. Weiterhin wäre es möglich, die Höheneinstellung der Nackenstützen, die z.B. elektronisch erfasst wird, für die Bestimmung der Augenhöhe zu verwenden.

Die Koordinaten müssen im gleichen Koordinatensystem wie das Koordinatensystem für die der Berechnung des Lichteinfalls sein.

Als gemeinsames Bezugssystem für alle Komponenten, also Lichtquelle bzw. Einfallswinkel, Position und Ausrichtung des Fahrzeugs, sowie die Position der Lichtquelle auf dem erfassten Bild bzw. die daraus abgeleitete Position und Richtung der Lichtquelle bzw. Lichtquellen, kann z.B. ein Weltkoordinatensystem, also ein sog. ECEF (Earth centered earth fixed)-System oder ein geodätisches Koordinatensystem, wie beispielsweise das bei GPS verwendete WGS84 (World Geodetic System) -System verwendet werden. Die Koordinaten können aber auch in ein lokales, zum Beispiel fahrzeugbezogenes Koordinatensystem umgerechnet werden. Die Ausrichtung des Fahrzeugs kann dabei z.B. über Sensoren, wie z.B. GPS, Kompass, Gyrometer, etc. bestimmt oder geschätzt werden.

Die Berechnung der Sonne erfolgt beispielsweise als Azimut der geographischen Länge und Elevation über dem Horizont, GPS Koordinaten werden üblicherweise in WGS84 ausgegeben und das Fahrzeug mit seiner Geometrie und der Angabe der Augenhöhe weisen ein lokales, auf das Fahrzeug fixiertes Koordinatensystem auf. Somit müssen Koordinatentransformationen in ein gleiches Koordinatensystem durchgeführt werden.

Somit kann anhand der Geometrie des Fahrzeugs, d.h., einschließlich der Karosserie, der Scheiben, etc. sowie der Position der Augen und dem ermittelten Einfallswinkel nun bestimmt werden, ob der Fahrer beim Fahren beeinträchtigt, bzw. negativ beeinflusst wird.

Gemäß einer Ausführungsform ist die Steuereinrichtung ferner eingerichtet, eine negative Beeinflussung auf den Fahrer bezüglich einer direkten Blendung des Fahrers zu ermitteln, und Maßnahmen durchzuführen, um die Blendung zu vermeiden. Der Fahrer wird in diesem Fall durch direkt in seine Augen treffendes Licht von vorne oder von der Seite geblendet. Das Licht wird in den Bildern der vorderen, bzw. der seitlichen Kameras erfasst, die Koordinaten der Lichtquelle, bzw. des Einfallwinkels bzgl. der Augen des Fahrers werden berechnet und, falls eine Blendwirkung ermittelt werden konnte, Maßnahmen gegen eine Blendwirkung durchgeführt. Die Maßnahmen in diesem Fall sind beispielsweise, dass die Scheiben abgedunkelt werden oder dass eine halbtransparente oder lichtundurchlässige Blende an Positionen bewegt wird, die den störenden Lichteinfall abschwächen oder verhindern.

Gemäß einer Ausführungsform ist die Steuereinrichtung ferner eingerichtet, eine negative Beeinflussung auf den Fahrer bezüglich einer indirekten Blendung des Fahrers zu ermitteln, und Maßnahmen durchzuführen, um die Blendung zu vermeiden. Diese Ausführungsform umfasst also das Berechnen von Koordinaten der Störlichtquellen anhand der Bilder und das Berechnen von Reflexionen an Fahrzeugteilen. Somit werden mittels des von der vorderen Kamera erfassten Bildes und der daraus ermittelten Koordinaten bzw. Winkel Reflektionen an der Motorhaube berechnet und eine Blendwirkung geprüft, oder, wenn das Bild der hinteren Kamera die Lichtquelle erfasst hat, geprüft, ob der Fahrer aufgrund einer Reflektion am Rückspiegel geblendet wird. Die möglichen Maßnahmen sind in diesem Fall ähnlich wie die der direkten Blendwirkung.

Gemäß einer Ausführungsform ist die Steuereinrichtung ferner eingerichtet, eine negative Beeinflussung auf den Fahrer bezüglich der Lesbarkeit von Anzeigen zu ermitteln, und Maßnahmen durchzuführen, um die Lesbarkeit der Anzeigen zu erhöhen. Die Störquellen werden in diesem Fall von seitlichen oder nach hinten gerichteten Kameras erfasst. Bei den Maßnahmen kann es beispielsweise um die Erhöhung der Helligkeit oder des Kontrastes der Anzeige handeln, oder aber auch eine der oben genannten Maßnahmen zur Verhinderung oder Abschwächung des störenden Lichteinfalls, soweit hierdurch der Fahrer nicht seiner Sicht behindert wird, die in diesem Fall Vorrang haben sollte.

Durch die erfassten Bilder können auch ein flächiges Störlicht, wie zum Beispiel durch ein reflektierendes Schneefeld oder eine Wasserfläche verursacht, detektiert werden. Auch hierbei kann ein Richtungsvektor bestimmt werden und entsprechende Maßnahmen wie eine Abdunkelung der Scheiben oder Erhöhung des Anzeigenkontrastes ergriffen werden.

Entsprechend kann auch Dunkelheit erfasst werden, was z.B. die Anpassung der Helligkeit einer Anzeige zur Folge hat, in diesem Fall eine Verringerung, so dass der Fahrer nicht durch diese geblendet wird, oder die Verringerung der Scheibentönung. Nach außen hin können z.B. die Scheinwerfer eingeschaltet werden.

Zur Bestimmung diese großflächig wirkenden Lichtverhältnisse kann beispielsweise auch die Durchschnittsbeleuchtung der Kamera über die Zeit überwacht werden. Falls die Beleuchtung sich drastisch erhöht, auch von einem Tag auf den anderen, ist es möglich dass der Fahrer Sichtbehinderungen erfährt.

Gemäß einer Ausführungsform bewirkt die Maßnahme gegen die negative Beeinflussung einen Zustandswechsel, und die Steuereinrichtung ist eingerichtet, den Zustandswechsel über eine Zeitspanne durchzuführen. Die Maßnahme zur Abdunkelung der Scheiben oder Erhöhung der Anzeigehelligkeit kann so gestaltet werden, dass ein fließender Übergang zu dem vorigen Zustand erfolgt. Somit wird berücksichtigt, dass sich Augen nur allmählich neuen Helligkeitsbedingungen anpassen. Auch ein Flickern bei schnellen hell-dunkel-Wechseln, z.B. bei einer Fahrt zwischen Bäumen hindurch, wird hierdurch verhindert.

Gemäß einer Ausführungsform weist das Fahrerassistenzsystem ferner einen Kommunikationskanal auf. Das Auftreten von negativen Beeinflussungen oder Störlichtquellen wird als Informationspaket zusammen mit einer Ortsinformation über diesen Kommunikationskanal kommuniziert. Diese Ausführungsform beinhaltet sowohl das Senden als auch das Empfangen von Daten bezüglich des Auftretens von negativen Beeinflussungen oder Störlichtquellen. So kann der Fahrer gewarnt werden, wo und auf welche Weise er beeinträchtigt wird und seine Fahrweise entsprechend anpassen. Oben beschriebene Maßnahmen können rechtzeitig und mit sanftem Übergang ergriffen werden.

Kommunikationskanäle können beispielsweise car2car-Kommunikation oder ein zentraler Server, auf dem eine Datenbank installiert ist, sein. Aus car2car Fahrdaten eines anderen Fahrzeugs kann zum Beispiel bestimmt werden, ob sich die beiden Fahrzeuge begegnen. Eine Maßnahme, die hierbei getroffen werden können, wären beispielsweise ein automatisches Abschalten des Fernlichts, um das andere Fahrzeug nicht zu blenden, oder eine Anpassung des Abblendlichtes.

Die Position, an der z.B. eine Blendwirkung durch Sonneneinstrahlung besteht, kann auch an eine Datenbank außerhalb des Fahrzeugs übertragen werden, so dass andere Fahrzeuge unter Nutzung dieser Datenbank gewarnt werden können. Eine solche Datenbank kann eine bereits vorhanden Datenbank sein, die z.B. einen Straßenzustand oder andere straßen- oder routenbezogene Daten enthält.

Gemäß einer Ausführungsform wird für mindestens eine Berechnung oder eine Maßnahme ein personalisiertes Profil angelegt. Die Steuereinrichtung ist eingerichtet ist, für mindestens eine Berechnung oder eine Maßnahme auf das personalisierte Profil zuzugreifen. Dies kann beispielsweise eine Konfigurationsdatei sein, in der Daten zur Größe eines bestimmten Fahrers abgelegt sind, so dass die Augenhöhe berechnet werden kann. Es kann sich hierbei weiterhin um eine Konfiguration handeln, in der eine Spiegeleinstellung abgespeichert ist, so dass bei Fahrtbeginn automatisch die Spiegel für eine bestimmte Person eingestellt werden und die Winkel der Spiegel Eingang in die Berechnungen finden. Weiterhin kann der Fahrer z.B. den Grad der Abdunkelung oder die maximale Abdunkelung angeben, oder welche Maßnahmen ausgeführt bzw. nicht ausgeführt werden sollen.

Gemäß einem Aspekt wird ein Fahrerassistenzverfahren zum Detektieren von Lichtverhältnissen bereitgestellt, aufweisend folgende Schritte:
Erfassen von Sensordaten;
Feststellen, ob die Sicht eines Fahrers des Fahrzeugs durch eine fahrzeugexterne Störlichtquelle negativ beeinflusst wird.

Gemäß einer Ausführungsform weist das Feststellen, ob die Sicht eines Fahrers des Fahrzeugs durch eine fahrzeugexterne Störlichtquelle negativ beeinflusst wird, weiterhin folgende Schritte auf:
Detektieren (102) von Störlichtquellen in den Bildern,
Berechnen (103) von Koordinaten der Störlichtquellen,
Bestimmen (104) von störungssensitiven Koordinaten,
Bestimmen (105), anhand der Koordinaten der Störlichtquellen und
der störungssensitiven Koordinaten, ob eine negative Beeinflussung auf den Fahrer vorliegt.

Ausführungsbeispiele der Erfindung sind in den Zeichnungen dargestellt und werden in der nachfolgenden Beschreibung näher erläutert. Es zeigen:
Fig. 1 ein Blockdiagramm eines Fahrerassistenzsystems für ein Fahrzeug zum Detektieren von Lichtverhältnissen gemäß einem Ausführungsbeispiel,
Fig. 2 ein Fahrzeug und eine ermittelte direkte Blendung des Fahrers gemäß einem Ausführungsbeispiel,
Fig. 3 ein Fahrzeug und eine ermittelte erste indirekte Blendung des Fahrers gemäß einem Ausführungsbeispiel,
Fig. 4 ein Fahrzeug und eine ermittelte zweite indirekte Blendung des Fahrers gemäß einem Ausführungsbeispiel,
Fig. 5 ein Fahrzeug und eine ermittelter Hell-Dunkel-Wechsel gemäß einem Ausführungsbeispiel.
Fig. 6 ein Fahrzeug mit einem System zum Detektieren von Lichtverhältnissen gemäß einem Ausführungsbeispiel.
Fig. 7 zeigt ein Blockdiagramm des Fahrerassistenzverfahrens gemäß einem Ausführungsbeispiel.

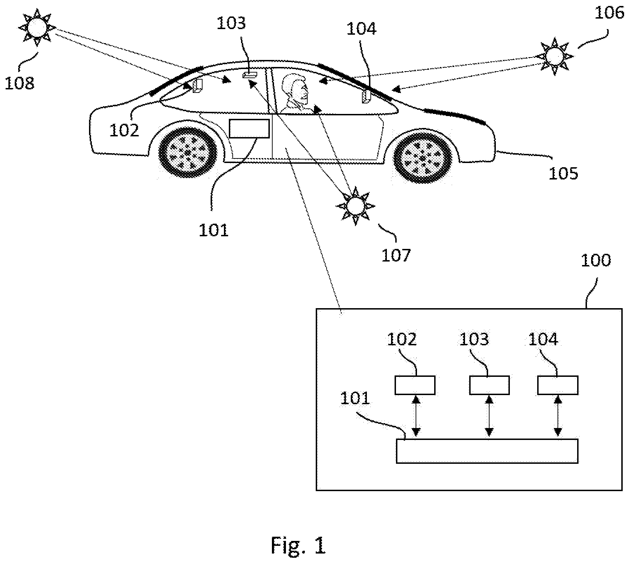

Fig. 1 zeigt ein Blockdiagramm eines Fahrerassistenzsystems 700 für ein Fahrzeug 105 zum Detektieren von Lichtverhältnissen gemäß einem Ausführungsbeispiel, aufweisend eine Sensoranordnung 102, 103, 104, eingerichtet zum Erfassen von Sensordaten; einer Steuereinrichtung 101, eingerichtet zum Feststellen, ob die Sicht eines Fahrers des Fahrzeugs durch eine fahrzeugexterne Störlichtquelle 106, 107, 108 negativ beeinflusst wird. Die Sensoren 102, 103, 104, z.B. Kameras, erfassen z.B. die Umgebung sowie das Licht der Lichtquelle 106, 107, 108 von verschieden Seiten des Fahrzeugs 105. Die Sensordaten, z.B. Bilder werden von der Steuereinheit 101 daraufhin ausgewertet, ob Lichtquellen vorhanden sind, die den Fahrer in dem Fahrzeug negativ beeinflussen.

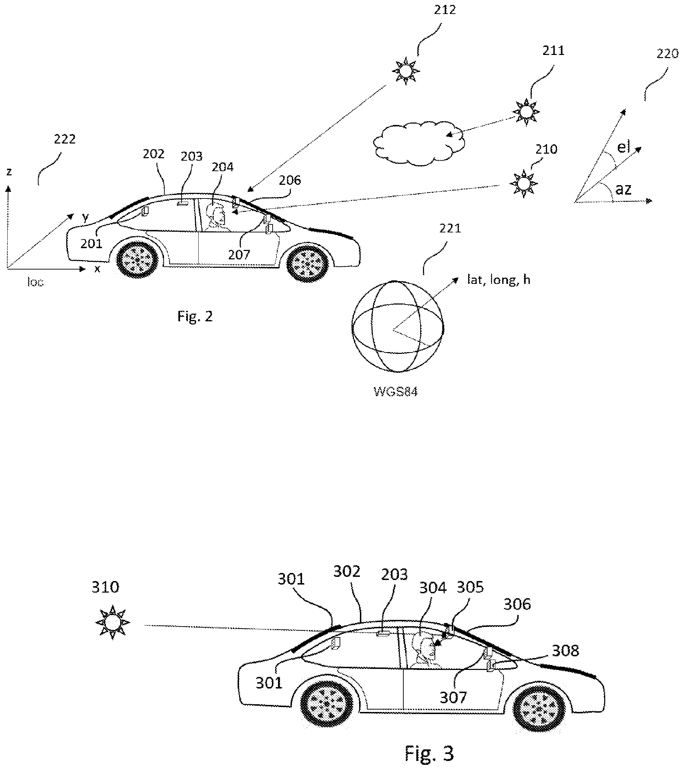

Fig. 2 zeigt ein Fahrzeug 202 und eine ermittelte direkte Blendung des Fahrers gemäß einem Ausführungsbeispiel. Eine hintere Kamera 201, zwei seitliche Kameras 203, von denen nur eine in der Figur zu sehen ist, und eine vordere Kamera 207 erfassen die Umgebung des Fahrzeugs 202. Die Störlichtquelle ist in Fig. 2 die Sonne bei Position 210, die den Fahrer 204 direkt blendet. Die Störlichtquelle wird hier z.B. auf den von der vorderen Kamera 207 aufgenommenen Bildern erkannt und die Scheiben können verdunkelt werden oder eine an der Windschutzscheibe 206 angebrachte Blende kann ausgefahren werden.

Wird die Sonne, wie die an Position 211 dargestellt, aufgrund von Abschattung durch z.B. Wolken nicht auf den Bildern detektiert, kann dennoch geprüft werden, ob diese eventuell kurze Zeit später blenden könnte. Hierzu können Daten zur Sonnenposition, Wetterdaten, sowie die Auswertung zuvor aufgenommener Bilder, wo die Sonne noch nicht verdeckt war und detektiert wurde, oder auch die Grundhelligkeit aktueller Bilder, etc. verwendet werden.

Fig. 2 zeigt auch beispielhaft die verschiedenen Koordinatensysteme, wie ein lokales, fahrzeugfixiertes Koordinatensystem 222, ein WGS84-Koordinatensystem 221 für die Position und die Richtung des Fahrzeugs, wie es ein Satelliten-Navigationsgerät berechnet, und der Sonnenstand wird in der Regel als Azimut in Bezug auf die geographische Länge und Elevation gegenüber der Horizont in einem System 220 berechnet.

Die Sonne an Position 212 hingegen wird von den Kameras 201, 203, 207 nicht erfasst, weil sie zu hoch steht. Hier ist zu prüfen, ob die Sonne 212 eine Blendwirkung hervorruft, oder ob aufgrund der Fahrzeuggeometrie keine solche auftritt.

Anstatt der Sonne 210 kann auch der Scheinwerfer eines entgegenkommenden Autos oder das Licht einer anderen Lichtquelle eine Blendwirkung hervorrufen. Der Lichteinfall wird ebenfalls über die vordere Kamera 207 detektiert, daraus die Position der Lichtquelle berechnet und die Blendwirkung auf den Fahrer wird berechnet. In die Berechnung der Blendwirkung geht, wie oben beschrieben, die Fahrzeuggeometrie und insbesondere auch die Augenposition, bzw. Augenhöhe ein.

Fig. 3 zeigt ein Fahrzeug 302 und eine ermittelte erste indirekte Blendung des Fahrers gemäß einem Ausführungsbeispiel. Die Sonne 310 oder eine andere Lichtquelle scheint von hinten durch die Heckscheibe 301 und wird von dem Rückspiegel 305 reflektiert, so dass der Fahrer geblendet wird. Zum Beispiel wird die Lichtquelle von der hinteren Kamera 301 erfasst, so dass durch die Auswertung des Bildes die Position der Lichtquelle errechnet werden kann, sowie der weitere Strahlengang, einschließlich der Reflektion am Spiegel 305.

Es wird weiterhin berechnet, ob die Lichtquelle 310 auf eine Anzeige trifft, so dass diese unzureichend abgelesen werden kann. Trifft dies zu, kann z.B. die Helligkeit oder der Kontrast der Anzeige erhöht werden.

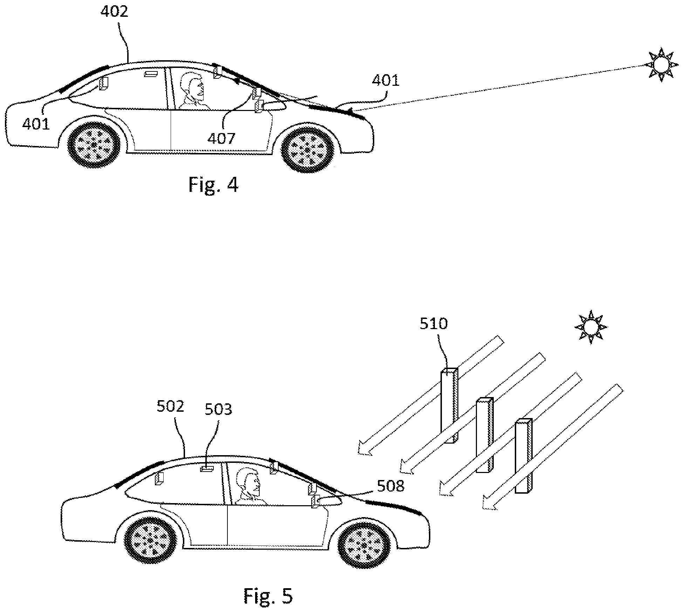

Fig. 4 zeigt ein Fahrzeug 402 und eine ermittelte zweite indirekte Blendung des Fahrers gemäß einem Ausführungsbeispiel. Hier trifft das Licht zunächst auf die Motorhaube 401 und wird von ihr reflektiert, so dass der Fahrer geblendet wird. Die Detektion erfolgt z.B. durch die Kamera 407. Die Berechnung erfolgt dann in ähnlicher Weise wie oben beschrieben. Hierbei können noch weitere Bedingungen berücksichtigt werden, wie z.B. die Farbe des Lacks und die Krümmung der Motorhaube 401.

Fig. 5 zeigt ein Fahrzeug 502 und eine ermittelter Hell-Dunkel-Wechsel aufgrund von z.B. Bauten 510 oder Bäumen gemäß einem Ausführungsbeispiel. Hier detektieren die seitlichen und vorderen Kameras 503, 508 einen schnellen Wechsel der Lichtintensität. Um ein Flackern durch ständig wechselnde, sofortige Maßnahmen zu vermeiden erfolgt die Maßnahme mit einem zeitlichen Übergang.

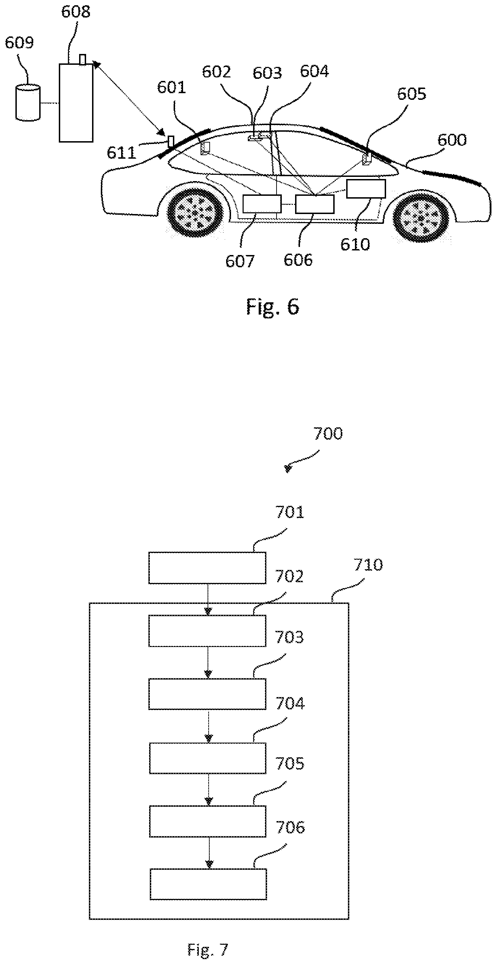

Fig. 6 zeigt ein Fahrzeug 600 mit einem System zum Detektieren von Lichtverhältnissen gemäß einem Ausführungsbeispiel.

Das System 601 ... 611 weist Kameras 601, 602, 603, 604 zum Erfassen der Umgebung des Fahrzeugs 600 auf. Die Kameras 601, 602, 603, 604 sind mit einer Steuerungseinheit 606 verbunden. Die Steuerungseinheit 606 weist ein computerlesbares Medium auf, auf dem ein Programmelement gespeichert ist, das, wenn es auf einem Prozessor ausgeführt wird, den Prozessor anleitet, die Verfahrensschritte zum Detektieren von Lichtverhältnissen und zum Durchführen von Maßnahmen, um störende Auswirkungen der Lichtverhältnisse zu verringern oder zu beseitigen, auszuführen. Das System 601 ... 611 kann ferner ein Navigationssystem 610 aufweisen, das z.B. auf Satellitennavigation basiert, an das aber auch weitere Komponenten und Sensoren, wie z.B. Geschwindigkeitsmesser oder Gyratoren angeschlossen sein können. Weiterhin kann die Steuerungseinheit 606 mit einer Kommunikationseinheit 607, d.h. einer Sende- und Empfangseinheit verbunden sein, die Daten bezüglich der ermittelten Lichtverhältnisse wie auch Positionsdaten des Fahrzeugs 600 über die Antenne 611 an einen entfernten Server 608 mit einer Datenbank 609 sendet. Der Server kann entsprechende Daten aus der Datenbank 609 auch in umgekehrter Richtung an das Fahrzeug 600 senden, so dass die Steuerungseinheit 606 beispielsweise aufgrund dieser Daten und selbst erfassten Daten eine negative Beeinflussung von Licht auf den Fahrer ermitteln kann und Maßnahmen gegen die negative Beeinflussung ergreifen kann.

Die Kommunikationseinheit 607 kann aber auch dazu eingerichtet sein, mit anderen Fahrzeugen zu kommunizieren um so Daten bezüglich der ermittelten Lichtverhältnisse wie auch Positionsdaten des Fahrzeugs 600 an weitere Fahrzeuge in der Umgebung zu senden, bzw. entsprechende Daten von diesen zu empfangen.

Fig. 7 zeigt ein Blockdiagramm eines Fahrerassistenzverfahrens (700) zum Detektieren von Lichtverhältnissen gemäß einem Ausführungsbeispiel, mit den Schritten Erfassen (701) von Sensordaten und Feststellen (710), ob die Sicht eines Fahrers des Fahrzeugs durch eine fahrzeugexterne Störlichtquelle negativ beeinflusst wird. Das Feststellen (710), ob die Sicht eines Fahrers des Fahrzeugs durch eine fahrzeugexterne Störlichtquelle negativ beeinflusst wird, weist weiterhin die Schritte auf: Detektieren (702) von Störlichtquellen in den Bildern, Berechnen (703) von Koordinaten der Störlichtquellen, Bestimmen (704) von störungssensitiven Koordinaten, Bestimmen (705), anhand der Koordinaten der Störlichtquellen und der störungssensitiven Koordinaten, ob eine negative Beeinflussung auf den Fahrer vorliegt, und Ergreifen (706) von Maßnahmen, um die negative Beeinflussung des Fahrers durch die Störlichtquelle zu verringern, falls eine negative Beeinflussung festgestellt wurde.

## Patentansprüche

1. Fahrerassistenzsystem (100) für ein Fahrzeug (105) zum Detektieren von Lichtverhältnissen in dem Fahrzeug, aufweisend:
eine Sensoranordnung (102, 103, 104), eingerichtet zum Erfassen von Sensordaten; und
eine Steuereinrichtung (101), eingerichtet zum Feststellen, ob die Sicht eines Fahrers des Fahrzeugs durch eine fahrzeugexterne Störlichtquelle negativ beeinflusst wird;
wobei die Sensordaten mindestens ein Bild aufweisen und die Steuereinrichtung (101) ferner eingerichtet ist, Koordinaten der Störlichtquellen anhand des mindestens einen Bildes zu berechnen
wobei die Steuereinrichtung (101) eingerichtet ist, Maßnahmen zu ergreifen, um eine negative Beeinflussung des Fahrers durch die Störlichtquelle zu verringern, falls eine negative Beeinflussung festgestellt wurde,
**dadurch gekennzeichnet, dass** die Steuereinrichtung ferner eingerichtet ist die negative Beeinflussung weiter aufgrund einer Reflexion der Störlichtquellen an einem Fahrzeugteil zu berechnen.

2. Fahrerassistenzsystem (100) nach Anspruch 1, wobei die Sensoren eingerichtet sind, als Sensordaten Bilder von allen Seiten des Fahrzeugs aus erfassen.

3. Fahrerassistenzsystem (100) nach Anspruch 1 oder 2, wobei die Steuereinrichtung (101) ferner eingerichtet ist, eine negative Beeinflussung des Fahrers bezüglich einer direkten Blendung des Fahrers zu ermitteln, wobei die Geometrie des Fahrzeugs berücksichtigt wird, und Maßnahmen durchzuführen, um die Blendung zu vermeiden.

4. Fahrerassistenzsystem (100) nach einem der vorherigen Ansprüche,
wobei die Steuereinrichtung (101) eingerichtet ist, störungssensitive Koordinaten bezüglich der negativen Beeinflussung in dem Fahrzeug zu bestimmen; die Sensoren (102, 103, 104) eingerichtet sind, Bilder der Fahrzeugumgebung zu erfassen; und
wobei die Steuereinrichtung (101) eingerichtet ist, die Störlichtquellen in den Bildern zu detektieren, die Koordinaten der Störlichtquellen zu berechnen, die störungssensitiven Koordinaten zu bestimmen, und anhand der Koordinaten der Störlichtquellen und der störungssensitiven Koordinaten zu ermitteln, ob eine negative Beeinflussung auf den Fahrer vorliegt.

5. Fahrerassistenzsystem (100) nach einem der vorherigen Ansprüche,
wobei die Steuereinrichtung (101) ferner eingerichtet ist, eine negative Beeinflussung auf den Fahrer bezüglich der Lesbarkeit von Anzeigen zu ermitteln, und Maßnahmen durchzuführen, um die Lesbarkeit der Anzeigen zu erhöhen,
wobei die Maßnahmen eine Erhöhung der Lichtintensität der Anzeige aufweisen.

6. Fahrerassistenzsystem (100) nach einem der vorherigen Ansprüche,
wobei die Maßnahme gegen die negative Beeinflussung einen Zustandswechsel bewirkt, und wobei die Steuereinrichtung (101) eingerichtet ist, den Zustandswechsel über eine Zeitspanne durchzuführen.

7. Fahrerassistenzsystem (100) nach einem der vorherigen Ansprüche, ferner aufweisend:
einen Kommunikationskanal, eingerichtet zum Kommunizieren des Auftretens von negativen Beeinflussungen oder Störlichtquellen als Informationspaket zusammen mit einer Ortsinformation.

8. Fahrerassistenzsystem (100) nach einem der vorherigen Ansprüche,
wobei die Steuereinrichtung (101) eingerichtet ist, für mindestens eine Berechnung oder eine Maßnahme auf ein personalisiertes Profil zuzugreifen.

9. Fahrerassistenzverfahren (700) zum Detektieren von Lichtverhältnissen, aufweisend folgende Schritte:
Erfassen (701) von Sensordaten;
Feststellen (710), ob die Sicht eines Fahrers des Fahrzeugs durch eine fahrzeugexterne Störlichtquelle negativ beeinflusst wird;
Berechnen von Koordinaten der Störlichtquellen anhand mindestens einen Bildes;
Berechnen einer negativen Beeinflussung aufgrund einer Reflexion der Störlichtquellen an einem Fahrzeugteil;
Ergreifen (706) von Maßnahmen, um die negative Beeinflussung des Fahrers durch die Störlichtquelle zu verringern, falls eine negative Beeinflussung festgestellt wurde.

10. Fahrzeug (600), das ein Fahrerassistenzsystem (100) nach einem der Ansprüche 1 bis 8 aufweist.

## Claims

1. Driver assistance system (100) for a vehicle (105) for detecting light conditions in the vehicle, comprising:
a sensor arrangement (102, 103, 104), configured for capturing sensor data; and
a control device (101), configured for ascertaining whether the vision of a driver of the vehicle is negatively influenced by an interfering light source external to the vehicle;
wherein the sensor data comprise at least one image and the control device (101) is furthermore configured to calculate coordinates of the interfering light sources on the basis of the at least one image, and
wherein the control device (101) is configured to take measures in order to reduce a negative influence on the driver caused by the interfering light source, if a negative influence has been ascertained,
**characterized in that** the control device is furthermore configured to calculate the negative influence further owing to a reflection of the interfering light sources at a part of the vehicle.

2. Driver assistance system (100) according to Claim 1, wherein the sensors are configured to capture images from all sides of the vehicle as sensor data.

3. Driver assistance system (100) according to Claim 1 or 2, wherein the control device (101) is furthermore configured to establish a negative influence on the driver in respect of direct dazzling of the driver, wherein the geometry of the vehicle is taken into account, and to implement measures in order to avoid the dazzling.

4. Driver assistance system (100) according to any of the preceding claims,
wherein the control device (101) is configured to determine interference-sensitive coordinates in respect of the negative influence in the vehicle; the sensors (102, 103, 104) are configured to capture images of the surroundings of the vehicle; and
wherein the control device (101) is configured to detect the interfering light sources in the images, to calculate the coordinates of the interfering light sources, to determine the interference-sensitive coordinates, and, on the basis of the coordinates of the interfering light sources and the interference-sensitive coordinates, to establish whether there is a negative influence on the driver.

5. Driver assistance system (100) according to any of the preceding claims,
wherein the control device (101) is furthermore configured to establish a negative influence on the driver in respect of the readability of displays, and to implement measures in order to increase the readability of the displays,
wherein the measures comprise increasing the light intensity of the display.

6. Driver assistance system (100) according to any of the preceding claims,
wherein the measure to counter the negative influence brings about a state change, and wherein the control device (101) is configured to implement the state change over a period of time.

7. Driver assistance system (100) according to any of the preceding claims, furthermore comprising:
a communication channel, configured for communicating the occurrence of negative influences or interfering light sources as an information packet together with location information.

8. Driver assistance system (100) according to any of the preceding claims,
wherein the control device (101) is configured to access a personalized profile for at least one calculation or one measure.

9. Driver assistance method (700) for detecting light conditions, comprising the following steps:
capturing (701) sensor data;
ascertaining (710) whether the vision of a driver of the vehicle is negatively influenced by an interfering light source external to the vehicle;
calculating coordinates of the interfering light sources on the basis of at least one image;
calculating a negative influence owing to a reflection of the interfering light sources at a part of the vehicle;
taking (706) measures in order to reduce the negative influence on the driver caused by the interfering light source, if a negative influence has been ascertained.

10. Vehicle (600) comprising a driver assistance system (100) according to any of Claims 1 to 8.

## Revendications

1. Système d'assistance au conducteur (100) pour un véhicule (105) destiné à détecter des conditions de luminosité dans le véhicule, comprenant :
un arrangement de capteurs (102, 103, 104), conçu pour acquérir des données de capteur ; et
un dispositif de commande (101), conçu pour constater si la visibilité d'un conducteur du véhicule est influencée négativement par une source de lumière parasite externe au véhicule ;
les données de capteur comportant au moins une image et le dispositif de commande (101) étant en outre conçu pour calculer les coordonnées des sources de lumière parasite à l'aide de l'au moins une image
et
le dispositif de commande (101) étant conçu pour prendre des mesures afin de réduire l'influence négative sur le conducteur par la source de lumière parasite dans le cas où une influence négative a été constatée,
**caractérisé en ce que** le dispositif de commande est en outre conçu pour calculer l'influence négative en plus sur la base d'une réflexion des sources de lumière parasite sur une partie du véhicule.

2. Système d'assistance au conducteur (100) selon la revendication 1, les capteurs étant conçus pour acquérir en tant que données de capteur des images de tous les côtés du véhicule.

3. Système d'assistance au conducteur (100) selon la revendication 1 ou 2, le dispositif de commande (101) étant en outre conçu pour identifier une influence négative sur le conducteur concernant un éblouissement direct du conducteur, la géométrie du véhicule étant prise en compte, et pour mettre en oeuvre des mesures en vue d'éviter l'éblouissement.

4. Système d'assistance au conducteur (100) selon l'une des revendications précédentes, le dispositif de commande (101) étant conçu pour déterminer des coordonnées sensibles aux perturbations dans le véhicule concernant l'influence négative ; les capteurs (102, 103, 104) étant conçus pour capturer des images de l'environnement du véhicule ; et
le dispositif de commande (101) étant conçu pour détecter les sources de lumière parasite dans les images, calculer les coordonnées des sources de lumière parasite, déterminer les coordonnées sensibles aux perturbations et, à l'aide des coordonnées des sources de lumière parasite et des coordonnées sensibles aux perturbations, identifier s'il y a présence d'une influence négative sur le conducteur.

5. Système d'assistance au conducteur (100) selon l'une des revendications précédentes,
le dispositif de commande (101) étant en outre conçu pour identifier une influence négative sur le conducteur concernant la lisibilité d'indicateurs, et pour mettre en oeuvre des mesures en vue d'augmenter la lisibilité des indicateurs,
les mesures comprenant une augmentation de l'intensité lumineuse des indicateurs.

6. Système d'assistance au conducteur (100) selon l'une des revendications précédentes, la mesure contre l'influence négative provoquant un changement d'état, et le dispositif de commande (101) étant conçu pour effectuer le changement d'état sur un intervalle de temps donné.

7. Système d'assistance au conducteur (100) selon l'une des revendications précédentes, possédant en outre :
un canal de communication, conçu pour communiquer la survenance d'influences négatives ou de sources de lumière parasite en tant que paquet d'informations conjointement avec une information de lieu.

8. Système d'assistance au conducteur (100) selon l'une des revendications précédentes,
le dispositif de commande (101) étant conçu pour accéder à un profil personnalisé pour au moins un calcul ou une mesure.

9. Procédé d'assistance au conducteur (700) destiné à détecter des conditions de luminosité, comprenant les étapes suivantes :
acquisition (701) de données de capteur ;
constatation (710) si la visibilité d'un conducteur du véhicule est influencée négativement par une source de lumière parasite externe au véhicule ;
calcul de coordonnées des sources de lumière parasite à l'aide d'au moins une image ;
calcul d'une influence négative sur la base d'une réflexion des sources de lumière parasite sur une partie du véhicule ;
prise (706) de mesures afin de réduire l'influence négative sur le conducteur par la source de lumière parasite dans le cas où une influence négative a été constatée.

10. Véhicule (600), qui possède un système d'assistance au conducteur (100) selon l'une des revendications 1 à 8.
